# EUROPÄISCHE PATENTSCHRIFT

(11) **EP 2 084 372 B1**
(45) Veröffentlichungstag und Bekanntmachung des Hinweises auf die Patenterteilung: **21.04.2010**
(21) Anmeldenummer: 07801187.1
(22) Anmeldetag: 28.07.2007
(51) Int. Cl.: F01K 23/10, F01K 25/10

(54) **VERFAHREN UND VORRICHTUNG ZUM EFFEKTIVEN UND EMISSIONSARMEN BETRIEB VON KRAFTWERKEN SOWIE ZUR ENERGIESPEICHERUNG UND ENERGIEWANDLUNG**
METHOD AND APPARATUS FOR EFFECTIVE AND LOW-EMISSION OPERATION OF POWER STATIONS, AS WELL AS FOR ENERGY STORAGE AND ENERGY CONVERSION
PROCÉDÉ ET DISPOSITIF POUR LE FONCTIONNEMENT EFFICACE ET À FAIBLE TAUX D'ÉMISSIONS DE CENTRALES ÉLECTRIQUES AINSI QUE POUR L'ACCUMULATION D'ÉNERGIE ET LA CONVERSION D'ÉNERGIE

(30) Priorität: 31.07.2006 DE 102006035273
(43) Veröffentlichungstag der Anmeldung: 05.08.2009
(73) Patentinhaber: Technikum Corporation, 06108 Halle (DE)
(72) Erfinder: WESTMEIER, Siegfried, 06108 Halle (DE)
(74) Vertreter: Hoffmann, Rolf
(86) Internationale Anmeldenummer: PCT/DE2007/001346
(87) Internationale Veröffentlichungsnummer: WO 2008/014769

(56) Entgegenhaltungen:
- DE-A1- 3 924 908
- US-A- 4 995 234
- US-A1- 2004 050 067

## Beschreibung

Die Erfindung betrifft ein Verfahren und einer technischen Vorrichtung zur verbesserten Nutzung der Wärmepotentiale eines Kraftwerkes und dessen Umgebung sowie damit verbundener Anlagen zur Verringerung der Kohlendioxid- und NOₓ-Emissionen an die Umwelt sowie die Zwischenspeicherung und Wiedernutzung von elektrischem Strom.

### Stand der Technik

Bei der vorgelegten Erfindung handelt es sich um ein komplexes System, mit dem auf die gegenwärtigen Anforderungen auf dem gegenwärtigen Energiesektor eine Antwort gefunden werden soll. Im Einzelnen muss das Anlagenkonzept folgenden Zielvorstellungen genügen:
- Nutzung von elektrischen Überkapazitäten zur Schaffung von Massespeichern sowie deren Nutzung zur Rückgewinnung elektrischer Energie mit hohem Wirkungsgrad,
- Schaffung eines emissionslosen Kraftwerkes,
- Nutzung von Entspannungsenergie und den damit verbundenen unterschiedlichen Wärmepotentialen zur Energieerzeugung,
- optimale Nutzung von Niedertemperaturwärme zur Stromgewinnung,
- Nutzung von thermischen Energiepotentialen verbundener Anlagen zur Erhöhung des elektrischen Wirkungsgrades der Gesamtanlage und
- Nutzung von thermischen Energiepotentialen der Umgebung der Anlage.

Trotz intensiver Recherchen wurden keine Hinweise auf eine ähnlich kompakte und vernetzte Anlagenstruktur gefunden, wie vorgeschlagen. Aus diesem Grund wurden Recherchen nur jeweils separat in den in den obigen Anstrichen genannten Aufgabengebieten vorgenommen.
Für die Zwischenspeicherung von elektrischer Energie haben sich als effektivste Methode Pumpspeicherwerke bewährt. Vorteilhaft bei dieser Anlagentechnik sind der hohe Wirkungsgrad sowie die vergleichsweise einfache technologische Gestaltung. Nachteilig an dieser Technologie sind der hohe Landschaftsverbrauch, die Beschränkung auf vergleichsweise sehr wenige geeignete Standorte und ein hoher Wasserverbrauch durch Verdunstung. Die fällt insbesondere negativ ins Gewicht bei der gewünschten Speicherung von elektrischem Strom aus Windkraftanlagen, weil Pumpspeicherwerke nur im Gebirge angelegt werden können und die Zentren der Windenergie vorwiegend im Flachland und in Meeresnähe liegen. Damit würde eine Entlastung der Stromnetze mittels Zwischenspeicherung entfallen. Als zweite Möglichkeit der Zwischenspeicherung von elektrischer Energie wurden in den USA unterirdische Druckluftspeicher angelegt, die mit überschüssiger Energie gefüllt wurden und bei zusätzlichem Energiebedarf eine Nutzung der Druckenergie über Expansionsmaschinen mit Generator erlaubt. Vorteilhaft ist hierbei wieder eine einfache technologische Gestaltung und die Nutzung von Luft als Arbeitsmedium. Nachteilig sind die hohen Kompressionsverluste, eine starke Wärmeabgabe an die Umgebung und der geringe Wirkungsgrad der Anlage.
Eine weitere Möglichkeit der Druckluftspeicherung besteht darin, dass die Druckluft nach der Speicherung bei erhöhtem Druck direkt brennerunterstützten Turbomaschinen (CAES-Konzept) zugeführt wird, wobei eine Kompression der Verbrennungsluft entfällt und sich der Gesamtwirkungsgrad erhöht.
Um die Speicherkapazität weiter zu erhöhen wird beispielsweise in der Druckschrift WO 01/33150 A1 analog zu Teilaspekten der vorgeschlagenen Lösung aus einem diskontinuierlich gefüllten Druckluftspeicher eine kontinuierlich arbeitende Luftzerlegungsanlage betrieben, wobei die Herstellungskosten für technische Gase verringert werden können. Da hier die Herstellungskosten technischer Gase im Mittelpunkt stehen, ist der Verlust durch Abführung der Kompressionswärme ein eingeplanter Verlust, dessen mögliche Nutzung in diesem Patent außerhalb der Betrachtung steht.
Weitere Versuche einer Zwischenspeicherung elektrischer Energie, wie z. B. durch Batterien und mittels anderer in der Entwicklung befindlichen Verfahren sind für die vorliegende Aufgabe nicht einsetzbar.

Die gegenwärtige Diskussion um Treibhauseffekt und Klimaveränderungen verlangen von den Kraftwerksbetreibern einen möglichst emissionsfreies Betreiben ihrer Anlagen. Da die Energieversorgung weltweit gegenwärtig noch unter Einsatz fossiler Brennstoffe geschieht, gibt es eine Vielzahl von Projekten, die sich mit der Abtrennung und Endspeicherung von Kohlendioxid beschäftigen. Die Abtrennung von Kohlendioxid auch Rauchgasen kann prinzipiell mit bekannten Verfahren der Kondensation, Absorption und Adsorption vorgenommen werden. Für die Endlagerung werden gegenwärtig verschiedene Szenarien und in ihre jeweiligen Auswirkungen auf die Umwelt sowie mögliche Gefährdungspotentiale für die Zukunft untersucht. So werden Möglichkeiten zur Lagerung von Kohlendioxid in der Tiefsee, in unterirdischen Gesteinsformationen und in den Horizonten ehemaliger Ergas- und Erdöllagerstätten in Betracht gezogen. Die Ansichten über die vorgeschlagenen Methoden werden sehr konträr diskutiert und sind in naher Zukunft nur ansatzweise als Lösungen zu bezeichnen. Die Ökonomie dieser Verfahren ist in der Regel nicht gegeben, weil die Standorte von Kraftwerk und den für die Einlagerung geeigneten Standorten zuweilen Tausende von Kilometern voneinander entfernt sind und Transporte eine Verflüssigung oder Verfestigung des Kohlendioxids voraus setzen.
Zur Verminderung von NOₓ-Emissionen sind eine Reihe von Verfahren bekannt und Stand der Technik. Ein NOₓ-freier Betrieb ist nur bei einer Verbrennung unter Einsatz von reinem Sauerstoff mit stickstofffreien Begleitgasen möglich. Hierzu läuft gegenwärtig ein Projekt unter Federführung des Unternehmens Vattenfall in Schwarze Pumpe, Deutschland. Dabei erfolgt auch die Abtrennung des Kohlendioxids mit Hilfe der Oxyfuel-Technologie. Von den Initiatoren wird eingeschätzt, dass dieses Verfahren sehr Energieintensiv ist und einen sehr niedrigen Wirkungsgrad besitzt. Nach geeigneten Orten für die Einlagerung wird gegenwärtig noch gesucht.

Die Nutzung von Entspannungsenergie zur Energieerzeugung ist bekannt und wird angewandt z. B. bei der Luftzerlegung, bei der Erdgasentspannung und bei der Nutzung von Druckluftspeichern für die Energiegewinnung. Der bei der Erdgasentspannung und Druckluftentspannung auftretende starke Kühleffekt ist dabei meist unerwünscht und wird wenn möglich, durch eine vorherige Aufheizung des unter Druck stehenden Mediums gemildert. Bei Luftzerlegungsanlagen wir dagegen der Abkühlungseffekt genutzt zur Verflüssigung und Trennung der Luft.

Für die Nutzung von Niederenergiewärme aus Verbrennungsprozessen gibt es bisher im Wesentlichen zwei Verfahren.
Beim ORC (Organic-Rankine-Cycle) - Verfahren wird über einen Wärmetauscher dem Prozessmedium Wärme entzogen und zur Dampferzeugung benutzt, der Dampf wird über eine Dampfturbine arbeitsleistend entspannt und treibt einen Generator an, wobei der entspannte Dampf zur Vorwärmung genutzt und dann kondensiert wird. Die Kondensationswärme wird an die Umwelt abgegeben. Die Leistungsfähigkeit wird dabei je nach eingesetztem Arbeitsmittel bestimmt von der Kondensationstemperatur (Umgebungstemperatur) und der erreichbaren Verdampfungstemperatur von etwa 300 K bis 625 K. Der erreichbare Wirkungsgrad einer ORC-Anlage beträgt bei einem Temperaturniveau von 373 K etwa 6,5 % und bei einem Temperaturniveau von 473 K etwa 13-14 %. Beim Kalina-Verfahren wird über einen Wärmetauscher dem Prozessmedium die Wärme mittels einer gesättigten Ammoniak-Wasser-Lösung entzogen, wobei Ammoniak ausgetrieben wird. Der Ammoniakdampf wird über eine Turbine entspannt und treibt über diese einen Generator an.
Danach wird das Ammoniak im abgekühlten Zustand wieder gelöst. Hierbei werden laut Literaturangaben etwas höhere Wirkungsgrade von etwa 18 % erreicht. Vorteilhaft ist dabei auch ein einfacherer verfahrenstechnischer Aufbau der Anlage, sowie der deutlich breitere wirksame Temperaturbereich des Arbeitsmediums.
Nachteilig bei diesem Verfahren sind jedoch die materialtechnischen Probleme, die sich aus der Aggressivität des Ammoniak-Wasser-Gemisches ergeben und die sich bei diesem bisher praktisch wenig erprobten Verfahren in einer Verringerung der Laufzeit ergeben würden. Ein weiterer Nachteil ist durch eventuelle Emissionen des hochgiftigen und umweltgefährdenden Ammoniaks bei möglichen Leckagen gegeben.
Beide Verfahren sind auch geeignet, wenn es um die Nutzung von Niedertemperaturwärmepotentialen der Umgebung geht. Allerdings ist hier bisher eine geeignete Einbindung oft schwierig und wird daher nach vorliegenden Recherchen nicht verwandt.
Weitere, aus der Patentliteratur bekannte Verfahren, haben sich bisher aber nicht technisch realisieren lassen. In allen drei Fällen wird CO₂ als Arbeitsmedium genutzt. Der vorliegenden Erfindung am nächsten kommen die aus den Druckschriften DE 196 32 019, DE 3 871538, US 4,995,234 und EP 0 277 777 B1 bekannten Lösungen.
In der Druckschrift DE 19632019 wird überkritisches Kohlendioxid als Arbeitsmedium zur Nutzung von Niedertemperaturwärme im Temperaturbereich von 40 bis 65°C eingesetzt. Dabei wird der Druckbereich so gewählt, dass der kritische Druck nicht unterschritten wird. Die Rückverdichtung erfolgt ausschließlich im fluiden Bereich. Dadurch bedingt sind die Kosten der Verdichtung zur Erzeugung des höheren Arbeitsdruckes relativ hoch. Nachteilig ist auch die Trennung in einen Arbeitskreis und einen Strömungskreis, die über einen Wärmeübertrager gekoppelt sind. Dies ist zwangsläufig mit höheren Verlusten verbunden.

Interessant ist der in der Druckschrift DE 3871538 offenbarte Weg der Nutzung eines Speichers mit Kohlendioxid am Tripelpunkt, dessen Fest-Flüssig-Mischung mittels eines Käfteerzeugers bei Überangebot von Energie erzeugt wird und der dann beim Betrieb als Spitzenkraftwerk dazu dient, die Verflüssigung von Kohlendioxid vorzunehmen. Auf diese Weise lassen sich Lastwechsel im elektrischen Netz z.B. im Tag-Nacht-Rhythmus ausgleichen. Im eigentlichen Arbeitskreis wird ebenfalls mit Kohlendioxid gearbeitet. Vorteilhaft bei diesem Verfahren ist die Möglichkeit der Nutzung überschüssiger Energie zur Erzeugung eines Kältespeichers. Dies ist sicher ein gangbarerer alternativer Weg. Nachteilig bei diesem Verfahren ist jedoch die relativ hohe erforderliche Mindesttemperatur von über 200°C im Falle der Niedertemperatur-Wärmenutzung und energetisch gesehen der relativ niedrige Arbeitsdruck. Ebenso nachteilig ist die erforderliche Gaskompression zum Erreichen der Arbeitsdrücke. Diese Faktoren haben wesentlichen Einfluss auf den Gesamtwirkungsgrad der Anlage zur.Erzeugung von Elektroenergie. Nachrechnungen zeigen, dass die damit erreichten Wirkungsgrade geringer als im vorgeschlagenen Verfahren sind.
In den Druckschriften US 4,995,234 und EP 0 277 777 B1 wird ein ähnliches Grundprinzip bei der Nutzung des Kältepotentials von LNG angewandt. Hier wird die Verflüssigung von CO₂ mittels verdampfenden LNG erreicht. Die Wärme wird durch Meerwasser und eine Gasturbine erzeugt. Nachteilig bei diesem Verfahren ist die Meerwassernutzung, vorteilhaft ist jedoch die Nutzung von LNG. Dies beschränkt aber gleichzeitig die Einsatzmöglichkeiten. Diese Verfahren dienen in erster Linie der energetischen Nutzung des Kältepotentials von LNG bei der Verdampfung und sind kraftwerksseitig nicht optimiert. Ebenfalls mit Kohlendioxid als Arbeitsmittel arbeitet ein Verfahren zur Erdwärmenutzung, welches in der Druckschrift US 3,875,749 beschrieben ist. Dieses Verfahren arbeitet nur im fluiden Bereich und im Gasgebiet, wobei das Kohlendioxid als Arbeitsmittel dient, in einem unterirdischen Speicher im komprimierten Zustand Wärme aufnimmt und dann über eine Turbine arbeitsleistend entspannt wird. Danach erfolgt eine erneute Kompression in den fluiden Bereich hinein. Nachteilig bei dem beschriebenen Verfahren sind die konstruktiv sehr aufwendig gestaltete Form der unterirdischen Wärmetauscher und die Gefahr der Ermüdung des Erdwärmepotentials in der Nähe der Kaverne durch Auskühlung. Da keine Parameter bezüglich Temperatur und Druck gegeben sind, ist eine nähere Einschätzung des Verfahrens nicht möglich.

### Aufgabe der Erfindung

Aufgabe der Erfindung ist ein Verfahren und eine Anlage zur Anwendung des Verfahrens, dessen Wirkungsgrad höher ist als der bekannter Verfahren und deren Arbeitsbereich ein breites Temperaturband umfasst, bei gleichzeitig einfachem konstruktivem Aufbau und materialtechnischem Aufwand.
Diese Aufgabe wird durch ein Verfahren und einer technischen Vorrichtung gelöst, bei deren Anwendung eine verbesserte Nutzung der Wärmepotentiale beim Betrieb eines Kraftwerkes bei gleichzeitiger Vermeidung jeglicher NOₓ-Emissionen, der deutlichen Verringerung der Abgabe von Kohlendioxid an die Umwelt, eine gute Regelbarkeit unter optimaler Nutzung vorhandener und sich verändernden Umgebungstemperaturen, eine Minimierung der Abwärme und optimale Fahrweise in Verbindung mit elektrischen Wirkungsgradverbesserungen sowie die Schaffung von Möglichkeiten, elektrischem Strom aus temporären Überkapazitäten zu speichern und nach Wandlung erneut und zeitversetzt effektiv zur Wirkungsgraderhöhung beim Betrieb eines Kraftwerkes im Normal-, aber vorzugsweise Spitzenbetrieb zu nutzen, erreicht wird.

Zum Zwischenspeichern wird, analog bekannten Verfahren, in der Wirkung aber effektiver, überschüssige elektrische Energie zum diskontinuierlichen Befüllen von Hochdruckspeichern für Erdgas, Druckluft und Kohlendioxid genutzt, wobei die jeweiligen Kompressionswärmen an die Umgebung der unterirdischen Speicher abgegeben wird, der Hochdruckspeicher für Luft als Puffer einer kontinuierlich arbeitenden Luftzerlegungsanlage zur Erzeugung von Flüssigsauerstoff dient, der nach Wiederverdampfung zusammen mit Erdgas und teilweise rück geführtem Abgas einer Gasturbine zugeführt wird. Die Verdampfungswärme des Sauerstoffs dient dabei zur Verflüssigung des als Wärmeträger und Antriebsmittel eingesetzten Kohlendioxids. Der Erdgasspeicher dient der Bevorratung und Versorgung mit Brennstoff und der Kohlendioxidspeicher ist Reservoir für den Wärmeträgerkreislauf zur Nutzung der Thermischen Energie der Anlage. Er wird mit kaltem CO₂ gefüllt und entnimmt der Umgebung Erdwärme, deren Potential durch die eingespeicherte Kompressionswärme immer wieder erneuert wird. Der Einsatz von reinem Sauerstoff und Erdgas sowie die Nutzung des Kohlendioxids als Wärmeträger erlauben einen thermodynamisch und technisch effektiven Verbund der Einzelanlagen zu einer in Hinblick auf den elektrischen Gesamtwirkungsgrad, die NOₓ -Vermeidung sowie die Kohlenmonoxid- und Kohlendioxid-Emissionsminimierung optimalen Anlagenkonstellation.

Im Dampfteil des Kraftwerkes wird die thermische Energie des Abgasstromes durch unter hohem überkritischen Druck stehendes Kohlendioxid als Wärmeträger aufgenommen. Danach wird der erwärmte überkritische Kohlendioxidstrom arbeitsleistend über eine Expansionsturbine , die mit einem Generator gekoppelt ist, entspannt, kühlt sich dabei ab, wird anschließend erneut unter Einsatz einer Kältequelle gekühlt und verflüssigt, in flüssiger Form auf den Arbeitsdruck komprimiert und dem Kohlendioxidspeicher wieder zugeführt. Als Kältequelle dienen die bei den jeweiligen Expansionsvorgängen von Ergas, Luft und Kohlendioxid entstehenden Abkühleffekte sowie die Verdampfungswärme und das Kältepotential des gespeicherten flüssigen Sauerstoffs.
Dabei ergibt sich die Effektivität der Gesamtanlage im überwiegenden Maße durch die gewählte Gesamtschaltung und die Verknüpfung der unterschiedlichen thermodynamischen Potentiale. Alle auftretenden Wärmemengen und Druckpotentiale werden nach partieller Zwischenspeicherung zur Erzeugung elektrischer Energie nutzbar gemacht. Der im Wärmetauscher gekühlte Abgasstrom wird teilweise auf ein für die Gasturbine optimales Druckniveau verdichtet, mit reinem Sauerstoff gemischt, bzw. mit reinem Sauerstoff und Erdgas in die Brennkammer der Gasturbine injiziert.
In der Aufbauphase des Kohlendioxiduntergrundspeichers wird dagegen der gesamte Abgasstrom verdichtet und erst danach geteilt. Der Anteil des Rauchgases welcher nicht rückgeführt wird, wird weiter verdichtet, durch die Abluft der Luftzerlegungsanlage gekühlt und dabei verflüssigt und über eine Flüssigpumpe in den Untergrundspeicher gepumpt. Bei gefülltem Untergrundspeicher wird dieser Verfahrensweg zur Ergänzung von Verlusten bzw. zur Gewinnung von reinem Kohlendioxid in flüssiger oder fester Form eingesetzt.

### Anwendungsbeispiel

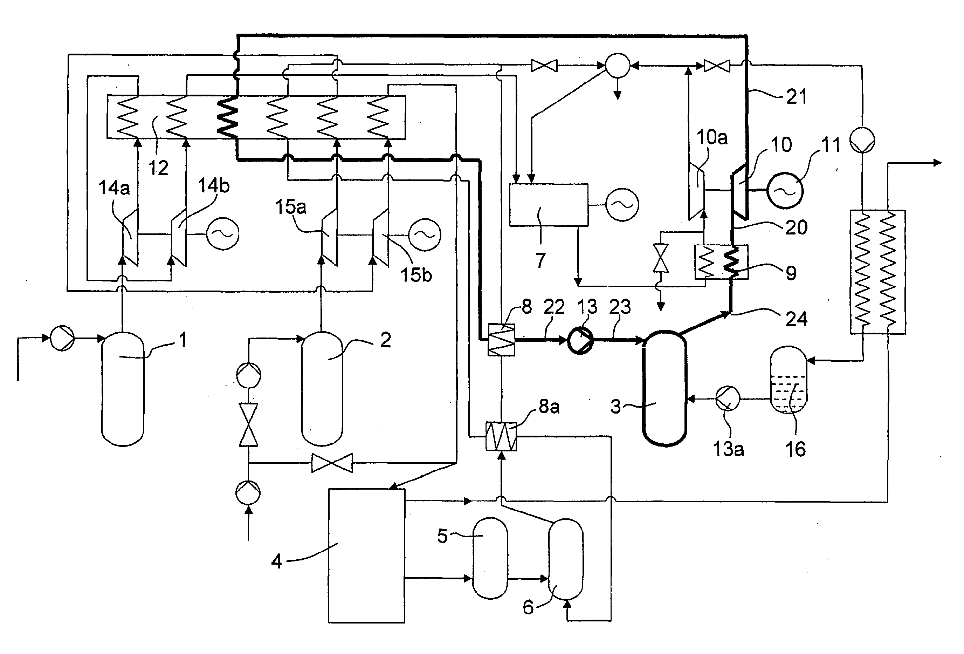

Weitere Vorteile der Erfindung ergeben sich aus der Beschreibung eines Anwendungsbeispiels der Erfindung bei verschiedenen Temperaturen der Wärmenutzung sowie mit und ohne Einsatz der Nutzung eines Erdwärmepotentials bei 301 K und der dazugehörigen Zeichnung mit entsprechenden Modifikationen.
In der Zeichnung ist der grundsätzliche Aufbau der Vorrichtung zur Anwendung des Verfahrens mit Nutzung Erdwärmepotential schematisch dargestellt.

Die für die Anwendung des Verfahrens ausschlaggebende Nutzung des thermischen Potentials des Kraftwerkes wird im folgenden Anwendungsbeispiel in den Mittelpunkt gestellt. Der entsprechende, mit den Bezugszahlen 21 bis 24 gekennzeichnete Kreislauf ist in der Zeichnung durch eine verstärkte Linienführung hervorgehoben. Alle anderen Vorteile sind dem Fachmann unmittelbar und ohne weitere Erläuterungen verständlich.
In der Tabelle sind für 2 Temperaturpotentiale 423 K und 473 K die entscheidenden Parameter wie übertragene Wärmemengen, Temperaturen und Leistungen in übersichtlicher Form dargestellt. Insbesondere ergibt sich aus dem Vergleich der jeweiligen Varianten A und B, entsprechend Nutzung des Kreislaufes mit und ohne Erdwärmenutzung der besondere Vorteil der Kombination verschiedener Potentiale.

Zunächst wird zeitlich anfallende, nicht nutzbare elektrische Energie zur Kompression und zum diskontinuierlichen Befüllen von Hochdruckspeichern für Erdgas **1,** Druckluft **2** und Kohlendioxid **3** genutzt. Der Hochdruckspeicher für Luft **2** dient dabei als Puffer einer kontinuierlich arbeitenden Luftzerlegungsanlage **4** zur Erzeugung von Flüssigsauerstoff, der in separaten Kryobehältern **5** gelagert wird und nach Rückverdampfung in einer Verdampfungseinrichtung **6** dem Verbrennungsvorgang in einer Gasturbine **7** zugeführt wird, derart, dass die Verdampfungswärme des Sauerstoffs dazu beiträgt, das als Wärmeträger und Antriebsmittel eingesetzte Kohlendioxid bei tiefen Temperaturen in einem Wärmetauscher **8** zu verflüssigen. Der Erdgasspeicher **1** dient der Bevorratung und Versorgung mit Brennstoff und der Kohlendioxidspeicher **3** einerseits als Zwischenspeicher für das flüssige bzw. überkritische Kohlendioxid als Wärmeträger und Arbeitsmittel und hat andererseits aktive Aufgaben im Wärmeträgerkreislauf des Kraftwerkes zur Verbesserung des Gesamtwirkungsgrades, indem es eine bessere Nutzung der Abwärme des Kraftwerksbetriebes für die Erzeugung von Elektroenergie gestattet. Der Einsatz von reinem Sauerstoff und Erdgas sowie die Nutzung des Kohlendioxids als Wärmeträger erlauben einen thermodynamisch und technisch effektiven Verbund der Einzelanlagen zu einer in Hinblick auf den elektrischen Gesamtwirkungsgrad, die NOₓ-Vermeidung sowie die Kohlenmonoxid- und Kohlendioxid-Emissionsminimierung optimalen Anlagenkonstellation.

Im Dampfteil eines Kraftwerkes, bestehend aus einem Abhitzekessel **9,** einer Gegendruckturbine **10** mit teilweiser Rückverdichtung des gekühlten Abgasstromes und Generator **11** wird die thermische Energie des Abgasstromes nach der Brennkammer bzw. am Ausgang der Gasturbine **7** durch unter hohem überkritischen Druck stehendes Kohlendioxid als Wärmeträger aufgenommen. Danach wird der erwärmte überkritische Kohlendioxidstrom arbeitsleistend über eine Expansionsturbine **10,** die mit einem Generator **11** gekoppelt ist, entspannt, kühlt sich dabei ab und anschließend unter Einsatz einer Kältequelle im Wärmetauschern **12** gekühlt und verflüssigt, in flüssiger Form mittels Flüssigpumpe **13** auf den Arbeitsdruck komprimiert und dem Kohlendioxidspeicher **3** wieder zugeführt. Als Kältequelle können, abhängig von der Fahrweise neben den im Anlagebetrieb durch die Druckreduzierung in den Expansionseinrichtungen **14a** und **14b** der Erdgasreduzierung, durch die Druckluftreduzierung in den Expansionseinrichtungen **15a** und **15b** und die Sauerstoffverdampfung underwärmung auch die Kältepotentiale der Abluft aus der Luftzerlegungsanlage **4** sowie bei Bedarf auch entsprechende Kältepotentiale der Umgebung genutzt werden. Der im Wärmetauscher **9** gekühlte Abgasstrom wird teilweise auf ein für die Gasturbine optimales Druckniveau verdichtet, mit reinem Sauerstoff gemischt, bzw. gemeinsam mit reinem Sauerstoff in die Brennkammer der Gasturbine injiziert. In der Aufbauphase des Kohlendioxiduntergrundspeichers **3** wird dagegen der gesamte Abgasstrom verdichtet und erst danach geteilt. Der Anteil des Rauchgases welcher nicht rückgeführt wird, wird weiter verdichtet, durch die Abluft der Luftzerlegungsanlage gekühlt und dabei verflüssigt und über eine Flüssigpumpe in den Untergrundspeicher gepumpt. Bei gefülltem Untergrundspeicher wird dieser Verfahrensweg zur Ergänzung von Verlusten bzw. zur Gewinnung von reinem Kohlendioxid in flüssiger oder fester Form eingesetzt.

Der Einsatz von Kohlendioxid als Wärmeträger und Arbeitsmittel unter Druck ist besonders vorteilhaft für die Nutzung thermischer Energie und deren Umsetzung in elektrische Energie. Dabei wird Kohlendioxid bei niedrigen Temperaturen verflüssigt, dann im flüssigen Zustand komprimiert bis auf überkritische Drücke, wobei in diesem Bereich die Wärmeaufnahme erfolgt, danach über eine Expansionsturbine arbeitsleistend entspannt, wobei die Expansionsturbine einen Generator antreibt und sich dabei abkühlt, wobei die Endtemperatur nach dem jeweiligen gewünschtem Verflüssigungsdruck eingeregelt wird. Danach erfolgt die Verflüssigung bei der sich bei dem entsprechenden Druck ergebenden Temperatur durch eine Kältequelle, wobei die Kondensationswärme abgeführt wird und die anschließende Druckerhöhung über eine Flüssigpumpe auf den überkritischen Arbeitsdruck vorgenommen wird.
Die Wahl des überkritischen Gebietes zur Wärmeaufnahme erfolgt wegen der dort für den Wärmetausch besonders günstigen thermodynamischen Bedingungen des überkritischen fluiden Bereichs für den zur Nutzung niederenergetischer Wärme interessanten Temperaturbereich.
Hierzu zählen hohe Werte der Wärmekapazität sowie niedrige Werte der Viskosität, verbunden mit einer dem Wasserdampf vergleichbaren Wärmeleitfähigkeit. Nach unten ist der thermodynamisch verfügbare Zustandsbereich durch den Tripelpunkt des Kohlendioxids bei etwa 217 K, entsprechend einem Druck von etwa 0,55 MPa begrenzt. Nach oben gibt es weder beim Druck noch bei der nutzbaren Temperatur thermodynamische Grenzen. Begrenzungen anderer Art sind jedoch aus praktischen und materialtechnischen Gründen gegeben.
Ein Vorteil der Verwendung von Kohlendioxid besteht auch darin, dass der Einsatz zusätzlicher Wärmetauscher entfällt, weil das Wärmeträgermedium im geschlossenen Kreislauf geführt wird, wobei es gleichzeitig als Arbeitsmedium im selbem Kreislauf dient.

Vorteilhaft ist außerdem, dass Kohlendioxid ein vergleichsweise geringes umweltgefährdendes Potential und eine relativ hohe Verfügbarkeit besitzt. In der gewählten Vorgehensweise besteht darüber hinaus die Möglichkeit, größere Mengen an Kohlendioxid einer sinnvollen Verwendung als Arbeitsmedium bei gleichzeitiger Nutzung von Erd- oder Umgebungswärme zur Verbesserung der jeweiligen Wirkungsgrade des Verfahrens zu nutzen. Hierbei ergeben sich wesentliche Vorteile gegenüber dem ORC- Verfahren und dem Kalina-Verfahren. Weitere Vorteile ergeben sich durch höhere Wirkungsgrade und die problemlose Kombination mit anderen Wärme- bzw. Kältepotentialen, die es gestatten, die im Kraftwerk erreichbaren Wirkungsgrade weiter zu erhöhen. Dies gelingt insbesondere durch Nutzung oberflächennaher Erdwärmepotentiale, sowie durch die Nutzung der Kältepotentiale bei Entspannungsprozessen, insbesondere bei der Entspannung von Erdgas und Druckluft erhaltenen Temperaturabsenkung zur Bereitstellung der zur Verflüssigung des Kohlendioxids notwendigen Kälteenergie.
Das Anwendungsbeispiel weist dies eindrucksvoll mit seinen hohen elektrischen Wirkungsgraden nach.
Das Verfahren kann wegen des riesigen Zwischenspeichers für Kohlendioxid auch in vorteilhafter Weise zu dessen Speicherung und damit Entfernung aus der Umwelt beitragen und erlaubt gleichzeitig den problemlosen diskontinuierlichen Betrieb des Kraftwerkes auch mit stark wechselnden Fahrweisen ohne nennenswerte Anfahr- und Anpassungszeiten. Wie im Beispiel zu sehen, gelingt es durch Nutzung des Erdwärmepotentials von nur 301 K den Gesamtwirkungsgrad des Kraftwerkes um ca. 2 % zu erhöhen.

Tabelle

| Strom Arbeits-mittel | Aggregat | Temperatur K | Druck MPa | Leistung KW Therm. Elektr. | | Elt Brutto | Elt Netto | Netto Wirk.-Grad | Beispiel |
|---|---|---|---|---|---|---|---|---|---|
| **20** | | 423 | 15 | | | | | | **Ia** |
| | **10+11** | | | | **1015,5** | | | | |
| **21** | | 260 | 2,0 | | | | | | |
| | **8+12** | | | **-289,5** | | | | | |
| **22** | | 253 | 2,0 | | | | | | |
| | **13** | | | | **-124** | | | | |
| **23,24** | | 260 | 15 | | | | | | |
| | **9** | | | **3788** | | | | | |
| | | | | | | **1015,5** | **890** | **23,5** % | |
| **20** | | 423 | 15 | | | | | | **Ib** |
| | **10+11** | | | | **1015,5** | | | | |
| **21** | | 260 | 2 | | | | | | |
| | **8+12** | | | **-289,5** | | | | | |
| **22** | | 253 | 2 | | | | | | |
| | **13** | | | | **-124** | | | | |
| **23** | | 260 | 15 | | | | | | |
| **24** | | 301 | | | | | | | |
| | **9** | | | **2922** | | | | | |
| | | | | | | **1015,5** | **890** | **30,5 %** | |
| **20** | | 473 | 15 | | | | | | **IIa** |
| | **10+11** | | | | **1721** | | | | |
| **21** | | 232 | 0,6 | | | | | | |
| | **8+12** | | | **-4486** | | | | | |
| **22** | | 220 | 0,6 | | | | | | |
| | **13** | | | | **-123** | | | | |
| **23,24** | | 224 | 15 | | | | | | |
| | **19** | | | **5598** | | | | | |
| | | | | | | **1721** | **1599** | **31,0 %** | |
| **20** | | 473 | 15 | | | | | | **IIb** |
| | **10+11** | | | | **1721** | | | | |
| **21** | | 232 | 0,6 | | | | | | |
| | **8+12** | | | **-3556** | | | | | |
| **22** | | 220 | 0,6 | | | | | | |
| | **13** | | | | **-123** | | | | |
| **23** | | 224 | 15 | | | | | | |
| **24** | | 301 | | | | | | | |
| | **9** | | | **2442** | | | | | |
| | | | | | | **1721** | **1599** | **44,4 %** | |

## Patentansprüche

1. Verfahren zur verbesserten Nutzung der Wärmepotentiale beim Betrieb eines Kraftwerkes,
**gekennzeichnet dadurch, dass** elektrischer Strom aus temporären Überkapazitäten genutzt wird, um in separaten Untergrundspeichern sowohl Erdgas, als auch Druckluft und Kohlendioxid unter hohem Druck zu speichern, wobei der Erdgasspeicher als Brennstoffspeicher für das Kraftwerk dient, der Druckluftspeicher als Pufferspeicher für eine kontinuierlich arbeitende Luftzerlegungsanlage zur bevorzugten Herstellung von Flüssigsauerstoff dient und der Kohlendioxidspeicher überkritisches Kohlendioxid als Wärmeträgermedium bereitstellt, welches den Wärmegehalt der Verbrennungsgase als Wärmequelle nutzt, Arbeit leistend über eine Expansionsmaschine, die mit einem Generator gekoppelt ist, entspannt wird, sich dabei abkühlt, anschließend unter Einsatz einer Kältequelle verflüssigt wird und in flüssiger Form wieder auf den Arbeitsdruck komprimiert und in einem Hochdruck-Zwischenspeicher bereitgestellt wird.

2. Verfahren nach Anspruch 1, **gekennzeichnet dadurch, dass** die arbeitsleistende Entspannung bis in den Kondensationsbereich hinein erfolgt, wobei eine Teilverflüssigung erfolgt, und das Gas-FlüssigkeitsGemisch anschließend unter Einsatz einer Kältequelle weiter verflüssigt wird und in flüssiger Form wieder auf den Arbeitsdruck komprimiert und zwischengelagert wird.

3. Verfahren nach Anspruch 1 und 2, **gekennzeichnet dadurch, dass** als Zwischenspeicher Salzkavernen in großer Tiefe genutzt werden.

4. Verfahren nach Anspruch 1 bis 3, **gekennzeichnet dadurch, dass** als Kältequelle zur Abführung der Kondensationswärme zumindest teilweise das Erdwärmepotential in 5 bis 30 m Tiefe genutzt wird.

5. Verfahren nach Anspruch 1 bis 4, **gekennzeichnet dadurch, dass** als Kältequelle zur Abführung der Kondensationswärme zumindest teilweise die niedrige Temperatur der Abluft der Luftzerlegungsanlage genutzt wird.

6. Verfahren nach Anspruch 1 bis 5, **gekennzeichnet dadurch, dass** als Kältequelle zur Abführung der Kondensationswärme zumindest teilweise die Umgebungstemperatur oder die Temperatur anderer mit der Umgebungstemperatur in unmittelbaren Kontakt stehender Medien, wie z.B. See-, Fluss- und /oder Meerwasser, genutzt wird.

7. Verfahren nach Anspruch 1 bis 6, **gekennzeichnet dadurch, dass** als Kältequelle zur Abführung der Kondensationswärme zumindest teilweise die bei der arbeitsleistenden Entspannung von Erdgas und/oder komprimierter Luft auftretenden tiefen Temperaturen genutzt werden.

8. Verfahren nach Anspruch 1 bis 7, **gekennzeichnet dadurch, dass** als Kältequelle zur Abführung der Kondensationswärme zumindest teilweise die Verdampfungswärme des im Prozess eingesetzten flüssigen Sauerstoffs und dessen Kältepotential genutzt werden.

9. Verfahren nach Anspruch 1 bis 8, **gekennzeichnet dadurch, dass** Salzkavernen sowohl als Massenspeicher für komprimierten Kohlendioxid im überkritischen Zustand als auch als Wärmeübertrager in diesem Prozess genutzt werden, wobei sie zusätzlich das Potential der möglichen Kohlendioxidabgabe an die Umwelt mindern.

10. Verfahren nach Anspruch 1 bis 9, **gekennzeichnet dadurch dass** der Aufbau des Kohlendioxidspeichers kontinuierlich aus den getrockneten Abgasen des Kraftwerkbetriebes vorgenommen wird, wobei diese unter Zuführung von Kompressionsenergie zunächst auf einen Druck zu komprimieren sind, bei der die Nutzung des jeweils vorhandenen Kältepotentials zur Verflüssigung ausreichend ist und danach mittels Kompression des flüssigen Kohlendioxids zur dem Tiefenspeicher zugeführt wird .

11. Verfahren nach Anspruch 1 bis 10, **gekennzeichnet dadurch, dass** bei Nutzung der Erdwärmepotentiale die Verflüssigung in der Nähe der Erdoberfläche 8 bis 30 m Tiefe erfolgt, während die Tiefenspeicherung wegen des hohen Druckes des Kohlendioxids von mindestens 10 MPa aus Sicherheitsgründen in mindestens 400 m Tiefe erfolgt, wobei der statische Druck des verflüssigten Kohlendioxids die notwendigen Kompressionskosten reduziert.

12. Verfahren nach Anspruch 1 bis 11, **gekennzeichnet dadurch, dass** das Verfahren im Verbund mit einem Spitzenlast-Kraftwerk auf Erdgasbasis betrieben wird und diskontinuierlich arbeitet, gestaltet derart, dass zeitweilig überschüssige Energie genutzt wird, um in Salzkavernen unter hohem Druck von 10 bis 20 MPa stehende Zwischenspeicher für Erdgas, Druckluft und das Arbeitsmedium Kohlendioxid anzulegen und aus dem Druckluftspeicher kontinuierlich über eine Luftzerlegungsanlage Druckluft bei 0,6 bis 0,8 MPa zur kontinuierlichen Produktion und Zwischenlagerung von flüssigen Sauerstoff zu entnehmen, um bei Bedarf Sauerstoff und Erdgas diskontinuierlich zu entnehmen und den Kohlendioxidspeicher sowohl als Erdwärmelieferant als auch als Pufferspeicher für das Arbeitsmedium zu nutzen.

13. Verfahren nach Anspruch 1 bis 11, **gekennzeichnet dadurch, dass** als Kraftwerk ein kontinuierlich arbeitendes Kraftwerk auf Basis GuD mit Erdgasbetrieb eingesetzt wird, gestaltet derart, dass zeitweilig überschüssige Energie genutzt wird, um in Salzkavernen unter hohem Druck von 10 bis 20 MPa stehende Zwischenspeicher für Erdgas, Druckluft und das Arbeitsmedium Kohlendioxid anzulegen und über eine Luftzerlegungsanlage kontinuierlich Druckluft vorzugsweise bei 0,6 bis 0,8 MPa zur kontinuierlichen Produktion und Zwischenlagerung von flüssigen Sauerstoff zu entnehmen, um diesen zusammen mit Erdgas kontinuierlich zu entnehmen und den Kohlendioxidspeicher sowohl als Erdwärmelieferant als auch als Pufferspeicher für das Arbeitsmedium zu nutzen, wobei der Flüssigsauerstoffspeicher als Puffer wirkt und damit auch Änderungen der Kraftwerksfahrweise ohne störende Einwirkungen auf den Betrieb der Luftzerlegungsanlage ermöglicht.

14. Verfahren nach Anspruch 1 bis 13, **gekennzeichnet dadurch, dass** ein Teil des Abgasstromes nach Verlassen des Kohlendioxid-Wärmetauschers nach Rückverdichtung und Kühlung bzw. unter Zugabe von Kohlendioxid aus dem Tiefenspeicher mit Drucksauerstoff zusammen der Brennkammer zugeführt wird , wobei Brenngasdruck und Druck des Abgas-Kohlendioxid-Sauerstoffgemisches dem Bedarf der Turbine entsprechend eingestellt werden.

15. Vorrichtung zur Anwendung des Verfahrens nach Anspruch 1 bis 14, bestehend aus
• mindestens je einem Untergrundspeicher für Erdgas, Druckluft und Kohlendioxid (1, 2, und 3),
• einer Luftzerlegungsanlage (4) zur Gewinnung von Sauerstoff,
• einer Gasturbine (7),
• einem Verdichter mit wahlweiser Ankopplung an Gasturbine oder Gegendruckturbine,
• einer Gegendruckturbine,
• Expansionsmaschinen zur Druckreduzierung mit Energiegewinnung,
• Mehreren mit den Turbinen und Expansionsmaschinen gekoppelte Generatoren (11) ,
• mindestens eine Pumpe zur Kompression des flüssigen Kohlendioxids,
• Behälter für flüssigen Sauerstoff und flüssiges Kohlendioxid,
• Verdampfungseinrichtung für flüssigen Sauerstoff und
• Wärmetauscher, Regeleinrichtungen und Ventilen.

## Claims

1. Process for the enhanced utilization of heat potentials in a power station, therein that electrical energy from temporary excess capacity is used to store natural gas as well as pressured air and carbon dioxide at high pressure in separate deep storages, therein the storage for natural gas is used as a fuel storage of the power station, the storage for pressured air is used as a buffer system for a continuous working air separation plant for the preferential production of liquid oxygen and the storage for supercritical carbon dioxide is making that available as heat transfer medium, which is taken off the heat content of the exhaust gases, after that labor-working expanded due to an expansion machine, which is coupled with a generator, is expanded and cooled in this process, after that is liquefied using a cold source and in liquid state compressed to the working pressure again and given into the high pressure interim storage.

2. A process is claimed in claim 1, wherein the labor-working expansion is made into the range of condensation, with partial liquefaction and the vapor-liquid-mixture is further liquefied employing a cold source and in liquid state compressed to the working pressure and put into interim storage.

3. A process is claimed in claim 1 and 2, wherein salt caverns are used as high pressure storages in big deep.

4. A process is claimed in claim 1 to 3, wherein the geothermal potential in 5 to 30 meters deep is used as cold source to remove the heat of condensation at least partially.

5. A process is claimed in claim 1 to 4, wherein the deep temperature of the waste air of the air separation plant is used as cold source to remove the heat of condensation at least partially.

6. A process is claimed in claim 1 to 5, wherein the ambient temperature or substances which are tempered by the ambient air, e.g. the water of seas, rivers and oceans is used as cold source to remove the heat of condensation at least partially.

7. A process is claimed in claim 1 to 6, wherein the deep temperature of the labor-working expansion of natural gas and/or compressed air is used as cold source to remove the heat of condensation at least partially.

8. A process is claimed in claim 1 to 7, wherein the heat of vaporization and the cold potential of the in the process used liquid oxygen is used as cold source to remove the heat of condensation at least partially.

9. A process is claimed in claim 1 to 8, wherein salt caverns act both as fluid storages for compressed supercritical carbon dioxide and as heat exchanger in the process and the storages act as an additional carbon dioxide capture to diminish the environmental impact.

10. A process is claimed in claim 1 to 9, wherein the storage for carbon dioxide is topped continuously by using of dried exhaust gases of the power plant in such way that first the gases are compressed to a pressure, which can be used to liquefy carbon dioxide with the given cold potential and then the liquefied carbon dioxide is compressed and given into the deep storage.

11. A process is claimed in claim 1 to 10, wherein the geothermal heat potential of earth near the surface of the earth in the depth of 8 to 30 m is used for the liquefaction of carbon dioxide while the deep storage because of the high pressure of 10 MPa at least is made in a depth of 400 meters at least for reasons of safety in doing so that the hydrostatic pressure reduces the necessary costs for compression.

12. A process is claimed in claim 1 to 11, wherein the process is combined with a peak load power station on the basis of natural gas and is working discontinuously in such way that temporary overcapacity energy is used to fill interim storages for natural gas, pressured air, and the working fluid carbon dioxide in salt caverns at a pressure of 10 to 20 MPa as buffer and taking out pressured air from the pressured air storage for driving an air separation plant at a pressure of 0.6 to 0.8 MPa to produce liquid oxygen continuously, to put it into interim storage, and to draw it off by need discontinuously and to use the storage for carbon dioxide as well as supplier of geothermal heat and buffer of the working medium.

13. A process is claimed in claim 1 to 11, wherein the process is combined with a gas turbine and fluid turbine power station on the basis of natural gas which is working continuously in such way that temporary overcapacity energy is used to fill high pressure storages for natural gas, pressured air, and the working fluid carbon dioxide in salt caverns under a pressure of 10 to 20 MPa as buffer and taking out pressured air for driving an air separation plant preferably at a pressure of 0.6 to 0.8 MPa to produce liquid oxygen continuously, to put it into interim storage, and to draw it off continuously, and the storage for carbon dioxide is used as well as a supplier of geothermal heat and buffer of the working medium, and in this way changes in the operation mode of the power plant do not interfere with the air separation plant.

14. A process is claimed in claim 1 to 13, wherein a part of the exhaust air after the carbon dioxide heat exchanger with recompressing and cooling, respectively due to the addition of carbon dioxide from the deep storage and compressed oxygen is given into the combustion chamber in such way that the pressure of the combustible gas and the pressure of the mixture of exhaust air, carbon dioxide and oxygen is adapted to the optimal input pressure of the turbine.

15. Equipment for the application of the process claimed in claim 1 through 14, consisting of
• At least one deep storage for natural gas, pressured air and carbon dioxide (1, 2, and 3),
• One air separation plant (4) for the generation of oxygen
• One gas turbine (7),
• One compressor with optionally coupled to a gas turbine or back-pressure turbine,
• One back-pressure turbine,
• Expansion machines for pressure reduction with energy winning,
• Several generators (11) coupled with the turbines and expansion machines,
• At least one pump for the compression of liquid carbon dioxide,
• Tanks for liquid oxygen and liquid carbon dioxide,
• Evaporator unit for liquid oxygen and
• Heat exchangers, control devices and valves.

## Revendications

1. Procédé visant à l'optimisation de l'utilisation de potentiels thermiques dans le cadre de l'exploitation d'une centrale, **caractérisé en ce qu'**on utilise l'électricité issue de surcapacités temporaires, afin de stocker, dans des réservoirs souterrains séparés et à haute pression, du gaz naturel, de l'air comprimé et du dioxyde de carbone, le réservoir de gaz naturel servant d'entrepôt de combustible pour la centrale, le réservoir d'air comprimé servant d'entrepôt de retenue pour une installation de décomposition d'air fonctionnant en service continu et utilisée, de préférence, pour la production d'oxygène liquide, et le réservoir de dioxyde de carbone mettant à disposition du dioxyde de carbone supercritique comme fluide vecteur thermique, utilisant la teneur en chaleur des gaz d'échappement comme source de chaleur, produisant de l'énergie par l'intermédiaire d'une machine à expansion, associée à une génératrice, ce fluide étant détendu ce qui cause un refroidissement de celui-ci, étant liquéfié ensuite à l'aide d'une source frigorifique et puis comprimé de nouveau sous forme liquide à la pression de service pour enfin le stocker dans un réservoir de stockage intermédiaire pressurisé.

2. Procédé selon la revendication 1 **caractérisé en ce que** la détention produisant de l'énergie va jusqu'à la plage de condensation, au cours de laquelle une liquéfaction partielle est réalisée, le mélange entre le gaz et le liquide étant soumis ensuite à une liquéfaction continue en utilisant une source frigorifique, pour enfin être comprimé à la pression de service sous forme liquide et mis au réservoir de stockage intermédiaire.

3. Procédé selon les revendications 1 et 2 **caractérisé en ce qu'**on utilise comme réservoir de stockage intermédiaire des cavités salines se situant à une grande profondeur.

4. Procédé selon les revendications 1 à 3 **caractérisé en ce qu'**on utilise comme source frigorifique pour dissiper la chaleur de condensation au moins partiellement le potentiel géothermique disponible à une profondeur de 5 à 30 m.

5. Procédé selon les revendications 1 à 4 **caractérisé en ce qu'**on utilise comme source frigorifique pour dissiper la chaleur de condensation au moins partiellement la basse température de l'air de sortie de l'installation de décomposition d'air.

6. Procédé selon les revendications 1 à 5 **caractérisé en ce qu'**on utilise comme source frigorifique pour dissiper la chaleur de condensation au moins partiellement la température ambiante ou la température d'autres fluide étant exposés directement à la température ambiante, tels que l'eau de lac, de fleuve et/ou de mer.

7. Procédé selon les revendications 1 à 6 **caractérisé en ce qu'**on utilise comme source frigorifique pour dissiper la chaleur de condensation au moins partiellement les basses températures générées par la détente du gaz naturel produisant de l'énergie et et/ou d'air comprimé.

8. Procédé selon les revendications 1 à 7 **caractérisé en ce qu'**on utilise comme source frigorifique pour dissiper la chaleur de condensation au moins partiellement la chaleur de vaporisation de l'oxygène liquide mise en oeuvre dans le cadre du processus et son potentiel frigorifique.

9. Procédé selon les revendications 1 à 8 **caractérisé en ce que** des cavités salines sont utilisées dans le cadre de processus comme réservoir de grand volume et pour le dioxyde de carbone en état supercritique et comme échangeur thermique, ceux-ci diminuant, comme effet supplémentaire, le potentiel d'un dégagement possible de dioxyde de carbone vers l'ambiance.

10. Procédé selon les revendications 1 à 9 **caractérisé en ce que** l'accumulation du dioxyde de carbone dans le réservoir est réalisée de manière continue à partir des gaz d'échappement séchés provenant de l'exploitation de la centrale, ces gaz devant, par l'amenée d'énergie de compression, être comprimés à une pression, à laquelle il est suffisant d'utiliser le potentiel frigorifique disponible à chaque fois pour pouvoir effectuer la liquéfaction, et le gaz étant amené ensuite vers le réservoir à grande profondeur par le biais de la compression du dioxyde de carbone liquéfié.

11. Procédé selon les revendications 1 à 10 **caractérisé en ce que** la liquéfaction a lieu à proximité de la surface terrestre à une profondeur de 8 à 30 m dans le cas de l'utilisation des potentiels géothermiques, pendant que la mise en stock à grande profondeur s'effectue, pour des fins de sécurité, à une profondeur minimum de 400 m en raison de la pression élevée du dioxyde de carbone d'au moins 10 MPa, la pression statique du dioxyde de carbone liquéfié permettant de réduire les coûts nécessaires pour le processus de compression.

12. Procédé selon les revendications 1 à 11 **caractérisé en ce que** ce procédé en exploitation associée à une centrale destinée à couvrir les charges de pointes est réalisé sur base de gaz naturel et travaille en régime continu, conçu de manière à utiliser temporairement de l'énergie excédentaire, afin d'accumuler des stocks intermédiaires en gaz naturel, air comprimé et dioxyde de carbone comme fluide de service étant sous des pressions élevées de 10 à 20 MPa dans les cavités salines, à extraire continuellement du réservoir d'air comprimé en quantités équivalentes à 0,6 à 0,8 MPa par le biais d'une installation de décomposition d'air pour permettre une production et stockage intermédiaire continus en oxygène liquide, et d'extraire afin de permettre une extraction discontinue d'oxygène et de gaz naturel, ainsi qu'à permettre une utilisation du réservoir de dioxyde de carbone comme source d'énergie géothermique et comme réservoir de retenue pour le fluide de service.

13. Procédé selon les revendications 1 à 11 **caractérisé en ce que** ce la centrale utilisée est du type combinée de chaleur et d'électricité exploitée en service continu et sur bas de gaz naturel, conçu de manière à utiliser temporairement de l'énergie excédentaire afin d'accumuler des stocks intermédiaires en gaz naturel, air comprimé et dioxyde de carbone comme fluide de service étant sous des pressions élevées de 10 à 20 MPa dans les cavités salines pour permettre une production et stockage intermédiaire continus en oxygène liquide, et d'extraire afin de permettre une extraction discontinue d'oxygène et de gaz naturel, ainsi qu'à permettre une utilisation du réservoir de dioxyde de carbone comme source d'énergie géothermique et comme réservoir de retenue pour le fluide de service, le réservoir d'oxygène liquide ayant la fonction d'un réservoir tampon et permet ainsi d'effectuer des changements au niveau du régime de la centrale sans avoir des affectations négative sur l'exploitation de l'installation de décomposition d'air.

14. Procédé selon les revendications 1 à 13 **caractérisé en ce qu'**une partie du flux du gaz d'échappement est amenée vers la chambre de combustion après avoir sorti de l'échangeur thermique à gaz carbonique et après avoir subi une nouvelle compression et réfrigération conjointement avec de l'oxygène pressurisé en ajoutant du dioxyde de carbone provenant du réservoir à grande profondeur, la pression du gaz combustible et celle-ci du mélange an gaz d'échappement, dioxyde de carbone et de l'oxygène étant adaptées au besoins de la turbine.

15. Dispositif pour la mise en application du procédé selon les revendications 1 à 14, composé :
• d'au moins d'un réservoir souterrain pour gaz naturel, air comprimé et dioxyde de carbone (1, 2, et 3),
• d'une installation de décomposition d'air (4) permettant l'extraction d'oxygène,
• d'une turbine à gaz (7),
• d'un compresseur permettent un accouplement optionnel à une turbine à gaz ou une turbine à contrepression,
• d'une turbine à contrepression,
• de machines à expansion servant à réduire la pression tout en produisant de l'énergie,
• de plusieurs génératrices (11) accouplés avec les turbines et machines à expansion,
• d'au moins d'une pompe servant à la compression du dioxyde de carbone liquide,
• de réservoirs pour le stockage d'oxygène et de dioxyde de carbone liquides,
• d'un dispositif d'évaporation pour l'oxygène liquide et
• d'échangeurs thermiques, de dispositif de régulation et de soupapes.
